# FASCICULE DE BREVET EUROPEEN

(11) **EP 3 833 853 B1**
(45) Date de publication et mention de la délivrance du brevet: **27.09.2023**
(21) Numéro de dépôt: 19759665.3
(22) Date de dépôt: 05.08.2019
(51) Int. Cl.: F01D 5/02, F16B 39/30

(54) **ASSEMBLAGE MÉCANIQUE POUR LA TRANSMISSION D'EFFORTS AXIAUX ENTRE AU MOINS DEUX PIÈCES DE ROTOR D'UNE TURBOMACHINE ET PROCÉDÉ DE RÉALISATION D'UN FILETAGE VARIABLE POUR UN TEL ASSEMBLAGE**
MECHANISCHE ANORDNUNG ZUR ÜBERTRAGUNG VON AXIALKRÄFTEN ZWISCHEN MINDESTENS ZWEI ROTORTEILEN EINER TURBOMASCHINE UND VERFAHREN ZUR HERSTELLUNG EINES VARIABLEN GEWINDES FÜR EINE SOLCHE ANORDNUNG
MECHANICAL ASSEMBLY FOR THE TRANSMISSION OF AXIAL FORCES BETWEEN AT LEAST TWO ROTOR PARTS OF A TURBOMACHINE AND METHOD FOR PRODUCING A VARIABLE THREAD FOR SUCH AN ASSEMBLY

(30) Priorité: 06.08.2018 FR 1857321
(43) Date de publication de la demande: 16.06.2021
(73) Titulaire: SAFRAN AIRCRAFT ENGINES, 75015 Paris (FR)
(72) Inventeur: JONNEKIN, Louis Edouard, 77550 MOISSY-CRAMAYEL (FR); ALLORA, Alessandro, 77550 MOISSY-CRAMAYEL (FR)
(74) Mandataire: Regimbeau
(86) Numéro de dépôt international: PCT/FR2019/051902
(87) Numéro de publication internationale: WO 2020/030873

(56) Documents cités:
- FR-A1- 2 975 449
- GB-A- 2 074 280
- US-A- 5 537 814
- US-A1- 2001 002 963
- US-A1- 2013 259 599

## Description

La présente invention concerne un assemblage mécanique pour la transmission d'efforts axiaux entre au moins deux pièces de rotor d'une turbomachine.

Elle concerne également un procédé de réalisation d'un filetage variable pour une portion filetée d'arbre et/ou un écrou d'un tel assemblage.

### DOMAINE DE L'INVENTION ET ETAT DE LA TECHNIQUE

### Rappels généraux sur les turbomachines

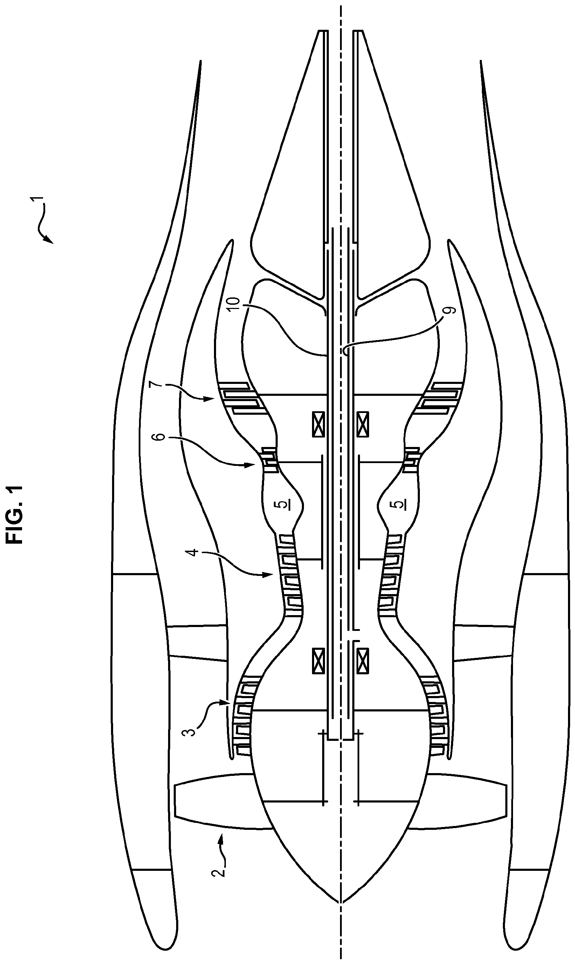

Un turboréacteur axial à double flux est représenté schématiquement sur la **figure 1****.** Le turboréacteur 1 comprend dans le sens d'écoulement d'air selon l'axe du moteur, une soufflante 2, un compresseur basse pression 3, un compresseur haute pression 4, une chambre de combustion 5, une turbine haute pression 6, une turbine basse pression 7 et une tuyère propulsive (non représentée).

La soufflante 1 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10.

En fonctionnement, un écoulement d'air comprimé par les compresseurs basse et haute pression 3 et 4 alimente une combustion dans la chambre de combustion 5. Les turbines 6,7 récupèrent de l'énergie cinétique issue de l'expansion des gaz de combustion avant de la restituer aux compresseurs 3,4 et à la soufflante 2 via les arbres de transmission 9,10.

### Assemblage des arbres de transmission

La réalisation des turboréacteurs implique une conception de la ligne d'arbre 9, 10 qui assure la transmission de la puissance depuis la turbine basse pression 7 (en l'aval) à la soufflante 2 (en l'amont). Il est souvent nécessaire de réaliser cet ensemble mécanique en plusieurs pièces pour des questions d'intégration et de fabricabilité. Ces multiples pièces devant être liées entre-elles par des liaisons assurant la transmission de différents efforts, on a souvent recours à une solution technique qui consiste en un tandem cannelure-filetage où :
- Les cannelures transmettent le couple de la turbine,
- Le filetage transmet les efforts axiaux.

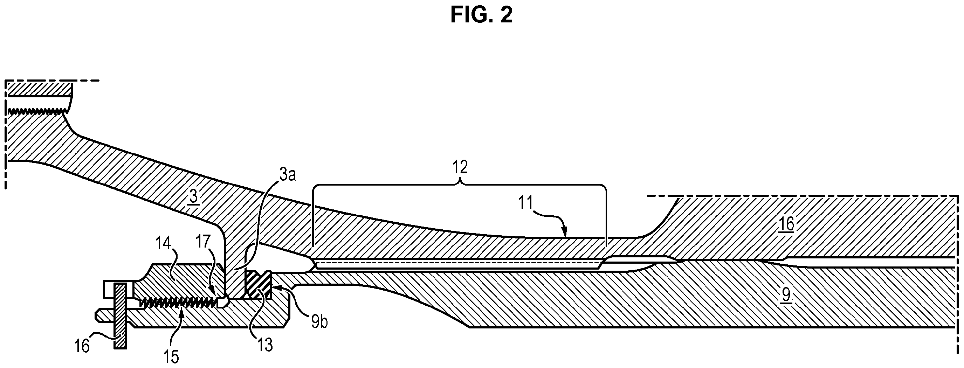

En référence à la **figure 2****,** l'arbre de turbine basse-pression 9 est logé à l'intérieur d'un tourillon 11 qui termine l'arbre du compresseur basse-pression 3. Le tourillon 11 et la portion de l'arbre 9 qui se trouve au niveau du tourillon 11 comportent des cannelures rectilignes complémentaires 12. Ces cannelures complémentaires 12 assurent la transmission de couple entre les deux pièces que constitue l'arbre de turbine 9 et l'arbre du compresseur basse-pression 3.

La transmission des efforts axiaux entre ces deux pièces 9 et 3 est quant à elle assurée par un assemblage à filetage et écrou. A cet effet, l'arbre 9 se termine par une portion filetée 15, dont le filetage externe coopère avec un écrou à filetage interne 14. Ledit écrou assure le serrage d'un talon annulaire intérieur 3a du compresseur basse pression 3 contre une cale de réglage 13. Ladite cale 13 est elle-même intercalée entre ledit talon 3a et une butée 9b que présente l'arbre 9 en amont des cannelures 12. Un jonc d'arrêt 16 est également prévu pour assurer le blocage en rotation de l'écrou.

### Contraintes sur les arbres de transmission

L'arbre de turbine basse-pression 9 et l'arbre du compresseur 3 sont de grande longueur et soumis à d'importants couples lors du fonctionnement du turboréacteur 1.

Au sein de cet assemblage le filetage joue un rôle essentiel en permettant la transmission des efforts axiaux qui peuvent atteindre plusieurs centaines de kN.

La tenue mécanique des filetages est de ce fait critique car l'intensité des efforts transmis provoque des contraintes très importantes sur de très petites zones, notamment dans le premier filet (zone 17 sur la figure 2). Ceci rend compliqué le dimensionnement de cet assemblage.

Le premier filet est de ce fait généralement le plus chargé en effort alors que les contraintes décroissent rapidement dans les filets suivants.

Cette situation provoque une usure rapide du premier filet (zone 17) et conduit à une faible durée de vie des pièces qui doivent être surdimensionnées pour atteindre l'objectif de durée de vie de l'assemblage.

Le document US 5,537,814 A1 décrit un assemblage de deux pièces d'une turbomachine à l'aide de filetages présentant des pas de filetage différents. Le document US 2001/0002963 A1 décrit un maintien de deux pièces par coopération de filetages, dans lequel le filetage de l'une des pièces varie. Le document US 2013/0259599 A1 décrit un maintien de deux pièces par coopération de filetages, dans lequel la rigidité d'un filetage est diminuée près d'une extrémité du filetage.

### Vis à pas variable

On connaît déjà dans des domaines autres que de celui des turbomachines des vis à pas variable.

De telles vis sont par exemple des vis sans fin utilisées dans des systèmes de mesure ou des machines d'usinage de précision pour ajuster le jeu fonctionnel de la vis de mesure et permettre une précision maximum dans le déplacement axial de la vis lorsqu'on la fait tourner.

Il s'agit donc de systèmes éloignés de celui de l'invention, tant du point de vue fonctionnel que du point de vue dimensionnel. En particulier, les vis transmettent un mouvement et non un effort et de tels systèmes ne s'intéressent pas à la transmission d'efforts axiaux aussi importants que ceux qui peuvent être rencontrés dans le cas de pièces de rotor de turbomachine.

### EXPOSE DE L'INVENTION

Un but de l'invention est de proposer un assemblage mécanique pour la transmission d'efforts axiaux entre au moins deux pièces de rotor d'une turbomachine, qui permet de pallier les inconvénients d'un arbre de transmission fileté de turbomachine.

En particulier, un autre but de l'invention est de limiter le surplus de masse nécessaire à assurer la tenue mécanique du filet.

Un but également de l'invention est de proposer, dans le contexte de l'assemblage de pièces de rotor de turbomachine, une solution qui améliore la répartition des contraintes mécaniques sur les portions filetées ou les écrous en prise et qui améliore la tenue mécanique et la durée de vie desdites portions filetées et écrous en optimisant la masse.

Un autre but encore de l'invention est de proposer un procédé de réalisation parfaitement adapté à la solution proposée.

Ainsi, selon un aspect ayant les caractéristiques de la revendication 1, l'invention propose un assemblage mécanique comportant deux pièces de rotor d'une turbomachine , l'une des pièces étant un arbre de compresseur, l'autre pièce étant un arbre de turbine au moins l'une de ces pièces étant un arbre du rotor et présentant une portion à filetage externe, ledit assemblage comportant en outre, , pour la transmission d'efforts axiaux entre ces deux pièces, un écrou à filetage interne apte à coopérer avec ledit filetage externe pour bloquer axialement par serrage l'autre pièce par rapport à la première pièce et permettre la transmission d'efforts axiaux entre ces deux pièces. La variation de pas d'un filet à un autre le long de la cote axiale du filetage est constante.

Le pas du filetage externe et/ou le pas de l'écrou varie(nt) le long de la cote axiale du filetage, l'espace entre le filet dudit filetage externe et le filet de l'écrou diminuant progressivement du premier filet au filet arrière dans le sens attendu pour l'effort axial.

De cette façon, la contrainte n'est plus supportée principalement par le premier filet, mais est répartie aussi sur les autres filets du filetage.

Egalement, selon un autre aspect ayant les caractéristiques de la revendication 7, l'invention propose un procédé de réalisation d'un filetage à pas variable d'une portion filetée ou d'un écrou d'un tel assemblage.

Selon ce procédé, on immerge de façon progressive dans un bain d'attaque, la pièce dont le pas de filetage doit être rendu variable.

Un tel procédé a l'avantage de permettre de bien meilleures précisions que ce que permettent les usinages conventionnels.

L'invention concerne en outre une turbomachine comportant au moins deux pièces de rotor assemblées par un assemblage du type de celui revendiqué, ledit assemblage comportant en outre un jeu de cannelures pour la transmission de couple entre ces deux pièces.

Elle concerne en outre un aéronef, caractérisé en ce qu'il comporte au moins un moteur qui est une turbomachine de ce type.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente de façon schématique différentes composantes d'un turboréacteur à double flux ;
- La figure 2, déjà présentée, est une vue en coupe schématique d'un assemblage mécanique entre l'arbre d'une turbine basse pression et l'arbre d'un compresseur basse pression d'un turboréacteur du type de celui présenté sur la figure 1 ;
- La figure 3 est une représentation schématique illustrant un mode de réalisation possible de l'invention ;
- La figure 4 illustre un procédé de réalisation possible ;
- La figure 5 est un graphe sur lequel on a porté les courbes de répartition d'une part dans le cas d'un filetage nominal et d'autre part pour différentes valeurs de variation de pas.

### DESCRIPTION DETAILLEE DE L'INVENTION

On se place dans ce qui suit dans le cas général d'un assemblage solidaire à filetage et écrou entre deux pièces de rotor d'une turbomachine, par exemple un turbomoteur d'aéronef. Cette turbomachine est par exemple, mais non limitativement, une turbomachine du type de celle de la figure 1 déjà décrite.

Les deux pièces assemblées sont un arbre de turbine et un arbre de compresseur.

Par commodité, on a repris les références 14 et 15 déjà introduites en figure 2 pour désigner respectivement l'écrou et la portion filetée d'un tel assemblage.

### Filetage à pas variable

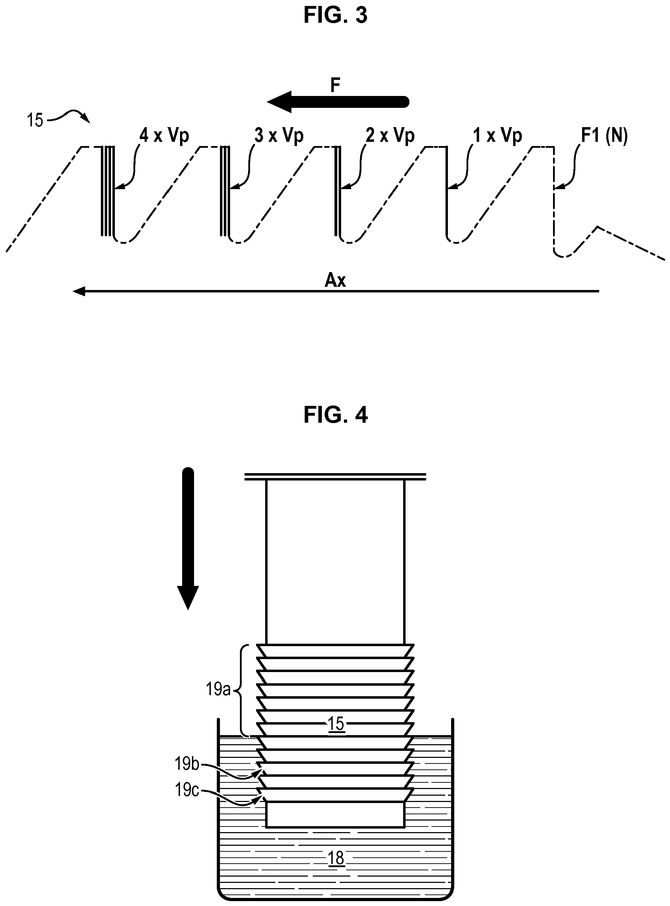

Dans le mode de réalisation de la **figure 3****,** la portion filetée 15 présente un pas qui varie le long de la cote axiale (flèche Ax sur la figure) des filets.

Notamment, l'épaisseur du filet augmente le long de ladite côte axiale Ax dans le sens d'où provient l'effort axial (en l'occurrence, dans l'exemple sur la figure, d'aval vers l'amont - flèche F). Les filets destinés à être du côté du talon annulaire intérieur 3a du compresseur basse pression 3 et de la butée 9b que présente l'arbre 9 sont moins épais que les filets destinés à en être les plus éloignés.

De cette façon, l'espace laissé au filet complémentaire de l'écrou diminue, ce qui permet de répartir l'effort et de charger y compris les filets « arrière ».

Ainsi lorsque le serrage de l'écrou 14 se fait, les filets « arrière » du filetage 15 et de l'écrou 14 sont en contact et sont sollicités. Ils reprennent plus d'effort qu'avec une conception classique.

Il existe en effet pour tous les assemblages par écrou un jeu fonctionnel entre les filetages mâle et femelle. Lorsque le serrage a lieu, le micro déplacement de l'écrou vient plaquer les flans des filets les uns contre les autres de façon simultanée. Le flux d'effort cherche à parcourir le moins de distance ; il concentre alors la contrainte dans les premiers filets. Dans la structure proposée, le jeu à l'arrière est plus faible qu'à l'avant, lors du serrage le contact se fait donc en premier sur les flancs arrière. Ainsi on force le flux d'effort à contourner les premiers filets pour aller charger davantage les filets arrière. Le filet avant est donc moins sollicité

Différentes géométries de profil sont envisageables pour le filet du filetage : polygonal, symétrique ou asymétrique.

Dans l'exemple de la figure 3, le filetage de la portion filetée 15 représentée est de type trapézoïdal asymétrique à 45°. Chaque section de filet présente :
- une face de reprise d'effort (en l'occurrence, face aval) faisant un angle nul par rapport à la perpendiculaire à l'axe du filetage et
- une face opposée (en l'occurrence, face amont) inclinée à 45° par rapport audit axe.

Cette géométrie est particulièrement adaptée pour la réalisation du filetage à pas variable. Elle permet de diminuer les contraintes en fond de filet.

Dans cet exemple, le pas du filetage (distance séparant la face de reprise d'effort de deux filets successifs au bout d'un tour) varie linéairement. Il diminue d'un tour à un autre d'une variation de pas Vₚ. C'est ce qui a été illustré par des représentations en surépaisseur sur la figure 3. Ainsi, par rapport au premier filet le long de la cote axiale Ax (filet nominal N, en l'occurrence situé le plus en amont), la face de reprise d'effort du filetage est décalée :
- d'une surépaisseur égale à 1 × Vₚ au filet suivant,
- d'une surépaisseur égale à 2 × Vₚ au troisième filet,
- d'une surépaisseur égale à 3 × Vₚ et 4 × Vₚ au quatrième et cinquième filets,
- etc...

Typiquement, le nombre de filets d'un filetage intervenant dans un assemblage de pièces de rotor d'une turbomachine est d'une dizaine (supérieur à huit, par exemple égal à douze).

La variation de pas est par exemple d'un ordre de grandeur de quelques micromètres.

Notamment, dans le cas d'un arbre d'un diamètre compris entre 45 et 90 mm (par exemple de l'ordre de 50 mm), la variation de pas Vp est avantageusement comprise entre 1 et 5 µm/pas, préférentiellement supérieure à 2 µm/pas, par exemple égale à 3 µm/pas ou au-delà.

En tout état de cause, la variation de pas est inférieure à la tolérance acceptée sur le pas d'un filetage dans ce type d'application, ladite tolérance étant quant à elle de l'ordre de plusieurs dizaines de µm (le pas des filets étant quant à lui de l'ordre de quelques dixièmes de millimètres).

On s'est placé dans ce qui précède dans le cas où la diminution - dans le sens d'application de l'effort - de l'espace entre les filets de l'écrou et les filets de la portion filetée complémentaire (en l'occurrence, l'arbre) est obtenue grâce à la variation du filetage de la portion filetée de l'arbre.

En variante, bien entendu, cette diminution peut être obtenue par variation de pas du filetage de l'écrou ou encore par variation de pas à la fois du filetage de la portion filetée de l'arbre et du filetage de l'écrou.

### Réalisation du filetage à pas variable

Différents procédés sont envisageables pour la réalisation du filetage à pas variable.

Notamment, le filetage à pas variable peut être réalisé de façon mécanique.

Pour atteindre les précisions souhaitées, une réalisation par attaque chimique acide est préférée.

A cet effet, ainsi qu'illustré sur la **figure 4****,** on immerge de façon progressive la pièce dont le filetage doit être rendue variable (pièce 15 en l'occurrence) dans un bain d'attaque 18. La vitesse de progression est adaptée pour obtenir la variation d'épaisseur souhaitée sur les filets (référencés 19a à 19c).

Chaque filet 19a à 19c est ainsi immergé dans le bain pendant une durée qui est adaptée pour dissoudre la matière et retirer progressivement la surépaisseur souhaitée pour chaque tour de filet.

Les filets 19a non immergés sont au profil nominal de la pièce filetée initiale.

Les filets intermédiaires 19b sont plus fins que le profil nominal.

Les filets 19c restés encore plus longtemps dans le bain sont encore plus fins.

Par exemple, dans le cas d'une variation de pas constante, la vitesse de progression dans le bain d'acide est constante.

Une fois les filets arrières atteints, on sort la pièce et on la rince et sèche le filetage externe 15 ou l'écrou 14 afin d'éliminer les résidus chimiques.

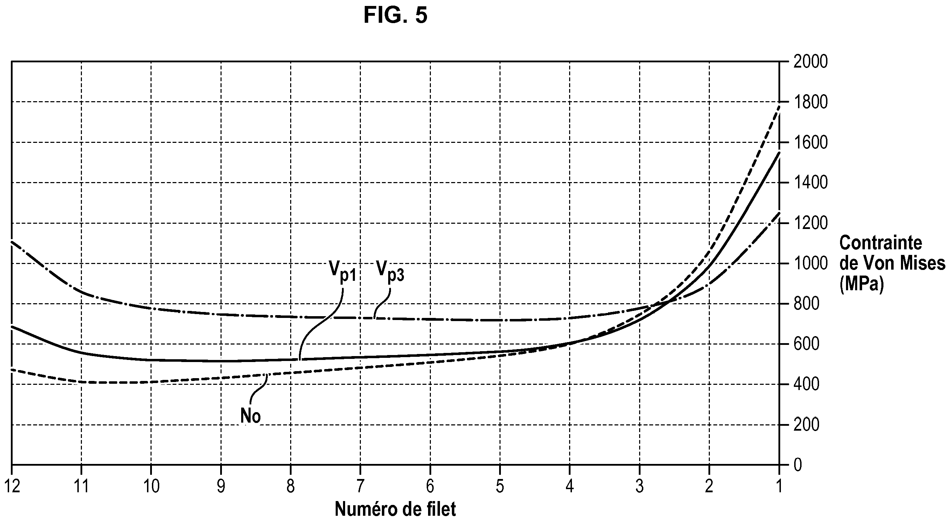

Typiquement, un masque peut être appliqué sur des zones de filetage qu'on ne souhaite pas décaper lors de ce processus. Dans un mode de réalisation, le masque peut être appliqué sur l'ensemble de filets de la portion filetée 15, sauf sur les faces de reprise d'effort (filets numéros 1 et 2 des courbes V_{p1 et} Vₚ₃ sur la figure 5).

Dans ce cas, le masque est enlevé après l'étape de rinçage.

Par rapport à des procédés purement mécaniques, un tel procédé par attaque chimique a l'avantage de permettre de meilleures précisions et d'être industriellement parfaitement maitrisé.

### Modélisation - Résultats

Une étude de modélisation des éléments finis est réalisée sur un cas du filetage écrou 14. Les 3 cas suivants sont réalisés et présentés :
- Un calcul au nominal (Vₚ = 0 µm/pas), présentant le profil de filetage standard
- Un calcul avec une variation de pas Vₚ = 1 µm/pas
- Un calcul avec une variation de pas Vₚ = 3 µm/pas

En référence à la **figure 5****,** la répartition des contraintes de Von Mises en MPa est présentée en fonction du numéro de filet, selon les variations de pas (filet à pas constant nominal (courbe No), variation de pas égale à Vₚ = 1 µm/pas (courbe Vₚ₁), variation de pas égale à 3 µm/pas (courbe Vₚ₃).

Les évolutions des contraintes sont les plus significatives pour le premier filet (filet F1 de profil N normalisé) : les contraintes diminuent lorsque l'on augmente la variation de pas (le long de l'axe Ax) : 1776 MPa pour le cas nominal, 1550 MPa pour 1 µm/pas, 1249 MPa pour 3 µm/pas. Cette diminution des contraintes présente 30 % d'allégement des contraintes supportées par le premier filet lorsque l'on compare le cas du 3 µm/pas par rapport au cas nominal.

Les filets numérotés entre 2 et 11 supportent quant à eux plus de contraintes lorsque la variation de pas est plus élevée.
- Pour le cas nominal, la contrainte supportée par le filet numéro 2 est à 1080 MPa et celle supportée par le filet numéro 10 est à 400 MPa. La valeur de contrainte stagne entre le filet numéro 10 et 11.
- Pour une variation de pas de 1 µm/pas, la décroissance a lieu entre le filet numéro 2 (1000 MPa) et le filet numéro 9 (500MPa). Une légère augmentation des contraintes est observée entre le filet numéro 9 et le filet numéro 11 (560 MPa).
- Pour une variation de pas de 3 µm/pas, la contrainte est quasi-constante : autour de à 900 MPa du filet 2 au filet 11.

Ainsi, une variation de pas constante de 3 µm/pas permet de mieux répartir les contraintes sur l'ensemble de filets par rapport au cas nominal.

Ceci permet d'améliorer la tenue des filets et la durée de vie de l'assemblage.

On notera en outre que cette meilleure répartition des contraintes permet en outre d'être plus prédictif lors de l'analyse de la tenue mécanique des filetages et de leur durée de vie.

Le procédé de réalisation proposé a en outre quant à lui l'avantage de permettre de diminuer les non-conformités non acceptables en production (fabrication plus robuste).

## Revendications

1. Assemblage mécanique comportant deux pièces (3, 9) de rotor d'une turbomachine, l'une des pièces étant un arbre de compresseur, l'autre pièce étant un arbre de turbine, au moins l'une (9) de ces pièces présentant une portion à filetage externe (15), ledit assemblage comportant en outre, pour la transmission d'efforts axiaux entre ces deux pièces, un écrou (14) à filetage interne apte à coopérer avec ledit filetage externe pour bloquer axialement par serrage l'autre pièce par rapport à la première pièce et permettre la transmission d'efforts axiaux entre ces deux pièces, **caractérisé en ce que** le pas du filetage externe (15) et/ou le pas de l'écrou (14) varie(nt) le long de la cote axiale (Ax) du filetage, l'espace entre le filet dudit filetage externe (15) et le filet de l'écrou (14) diminuant progressivement du premier filet au filet arrière dans le sens attendu pour l'effort axial (F), et **caractérisé en ce que** la variation de pas (Vp) d'un filet à un autre le long de la cote axiale du filetage est constante.

2. Assemblage selon la revendication 1, **caractérisé en ce qu'**un filetage à pas variable est de section trapézoïdale asymétrique à 45°.

3. Assemblage selon la revendication 1, **caractérisé en ce que** la variation de pas (Vₚ) d'un filet à un autre est inférieure à la tolérance sur le pas de filetage.

4. Assemblage selon la revendication 1, **caractérisé en ce que** la portion filetée est d'un diamètre compris entre 45 et 90 mm et **en ce que** la variation de pas Vp est comprise entre 1 et 5 µm/pas.

5. Assemblage selon la revendication 4, **caractérisé en ce que** la variation de pas est supérieure à 2 µm/pas.

6. Assemblage selon la revendication 1, dans lequel la pièce à portion filetée est l'arbre de compresseur, tandis que l'autre pièce est l'arbre de turbine.

7. Procédé de réalisation d'un filetage à pas variable d'une portion filetée ou d'un écrou d'un assemblage selon l'une des revendications précédentes, dans lequel on immerge de façon progressive dans un bain d'attaque (18), la pièce (15) dont le pas de filetage doit être rendu variable.

8. Procédé selon la revendication 7, dans lequel vitesse de progression dans le bain d'attaque est constante.

9. Turbomachine (1), **caractérisé en ce qu'**au moins deux pièces (3, 9) de rotor sont assemblées par un assemblage selon l'une des revendications 1 à 6, ledit assemblage comportant en outre un jeu de cannelures (12) pour la transmission de couple entre ces deux pièces.

10. Aéronef, **caractérisé en ce qu'**il comporte au moins un moteur qui est une turbomachine selon la revendication 9.

## Patentansprüche

1. Mechanische Anordnung, aufweisend zwei Rotorteile (3, 9) einer Turbomaschine, wobei das eine der Teile eine Kompressorwelle ist, wobei das andere Teil eine Turbinenwelle ist, wobei mindestens das eine (9) von diesen Teilen einen Abschnitt mit Außengewinde (15) aufweist, wobei die Anordnung ferner für die Übertragung von Axialkräften zwischen diesen zwei Teilen eine Mutter (14) mit Innengewinde aufweist, das imstande ist, mit dem Außengewinde zusammenzuwirken, um das andere Teil im Verhältnis zum ersten Teil axial durch Spannen zu arretieren und die Übertragung axialer Kräfte zwischen diesen zwei Teilen zu gestatten, **dadurch gekennzeichnet, dass** die Steigung des Außengewindes (15) und/oder die Steigung der Mutter (14) entlang des Axialmaßes (Ax) des Gewindes variiert/variieren, wobei sich der Raum zwischen dem Gewindegang des Außengewindes (15) und dem Gewindegang der Mutter (14) nach und nach vom ersten Gewindegang zum hinteren Gewindegang in der für die axiale Kraft (F) erwartete Richtung verringert, und **dadurch gekennzeichnet, dass** die Steigungsvariation (Vp) von einem Gewindegang zu einem anderen entlang des Axialmaßes des Gewindes konstant ist.

2. Anordnung nach Anspruch 1, **dadurch gekennzeichnet, dass** ein Gewinde mit variabler Steigung einen asymmetrischen trapezförmigen Querschnitt von 45° hat.

3. Anordnung nach Anspruch 1, **dadurch gekennzeichnet, dass** die Steigungsvariation (Vₚ) von einem Gewindegang zu einem anderen kleiner als die Gewindesteigungstoleranz ist.

4. Anordnung nach Anspruch 1, **dadurch gekennzeichnet, dass** der Gewindeabschnitt einen Durchmesser hat, der zwischen 45 und 90 mm liegt, und dass die Steigungsvariation Vp zwischen 1 und 5 um/Steigung liegt.

5. Anordnung nach Anspruch 4, **dadurch gekennzeichnet, dass** die Steigungsvariation größer als 2 um/Steigung ist.

6. Anordnung nach Anspruch 1, wobei das Teil mit Gewindeabschnitt die Kompressorwelle ist, wohingegen das andere Teil die Turbinenwelle ist.

7. Verfahren zur Herstellung eines Gewindes mit variabler Steigung eines Gewindeabschnitts oder einer Mutter einer Anordnung nach einem der vorangehenden Ansprüche, wobei das Teil (15), dessen Gewindesteigung variabel gemacht werden muss, nach und nach in ein Ätzbad (18) eingetaucht wird.

8. Verfahren nach Anspruch 7, wobei die Progressionsgeschwindigkeit im Ätzbad konstant ist.

9. Turbomaschine (1), **dadurch gekennzeichnet, dass** mindestens zwei Rotorteile (3, 9) anhand einer Anordnung nach einem der Ansprüche 1 bis 6 zusammengebaut sind, wobei die Anordnung ferner ein Riffelspiel (12) für die Übertragung von Kraftmoment zwischen diesen zwei Teilen aufweist.

10. Flugzeug, **dadurch gekennzeichnet, dass** es mindestens einen Motor aufweist, der eine Turbomaschine nach Anspruch 9 ist.

## Claims

1. A mechanical assembly including two rotor parts (3, 9) of a turbomachine, one of the parts being a compressor shaft, the other part being a turbine shaft, at least one (9) of these parts having a portion with external threading (15), said assembly further including, for the transmission of axial forces between these two parts, a nut (14) with internal threading able to cooperate with said external threading to axially block by tightening the other part with respect to the first part and allow the transmission of axial forces between these two parts, **characterized in that** the pitch of the external threading (15) and/or the pitch of the nut (14) varies/vary along the axial height (Ax) of the threading, the space between the thread of said external threading (15) and the thread of the nut (14) progressively decreasing from the first thread to the rear thread in the expected direction for the axial force (F), and **characterized in that** the pitch variation (Vₚ) from one thread to another along the axial height of the threading is constant.

2. The assembly according to claim 1, **characterized in that** a variable-pitch threading has a 45° asymmetrical trapezoidal section.

3. The assembly according to claim 1, **characterized in that** the pitch variation (Vₚ) from one thread to another is lower than the tolerance on the threading pitch.

4. The assembly according to claim 1, **characterized in that** the threaded portion has a diameter comprised between 45 and 90 mm and **in that** the pitch variation Vp is comprised between 1 and 5 µm/pitch.

5. The assembly according to claim 4, **characterized in that** the pitch variation is greater than 2 µm/pitch.

6. The assembly according to claim 1, wherein the part with a threaded portion is the compressor shaft, while the other part is the turbine shaft.

7. A method for making a variable pitch threading of a threaded portion or of a nut of an assembly according to any of the preceding claims, wherein the part (15) whose threading pitch is to be made variable is progressively immersed in an etching bath (18).

8. The method according to claim 7, wherein the rate of progression in the etching bath is constant.

9. A turbomachine (1), **characterized in that** at least two rotor parts (3, 9) are assembled by an assembly according to any of claims 1 to 6, said assembly further including a set of splines (12) for the torque transmission between these two parts.

10. An aircraft, **characterized in that** it includes at least one engine which is a turbomachine according to claim 9.
